# EUROPEAN PATENT SPECIFICATION

(11) **EP 4 323 669 B1**
(45) Date of publication and mention of the grant of the patent: **25.12.2024**
(21) Application number: 21727538.7
(22) Date of filing: 13.04.2021
(51) Int. Cl.: F16G 11/10

(54) **LOCKING SYSTEM FOR CORD**
VERRIEGELUNGSSYSTEM FÜR SCHNUR
SYSTÈME DE VERROUILLAGE POUR CÂBLE

(43) Date of publication of application: 21.02.2024
(73) Proprietor: Bertelli Catiuscia & C. Snc, 24060 Castelli Calepio (BG) (IT); Il Bottone Assemblato S.r.l., 25030 Rudiano (BS) (IT)
(72) Inventor: SILVESTRI, Giancarlo, 24060 Castelli Calepio (BG) (IT); RUGGERO, Gelsomino, 25030 Rudiano (BS) (IT)
(74) Representative: M. Zardi & Co S.A.
(86) International application number: PCT/IB2021/053036
(87) International publication number: WO 2022/219370

(56) References cited:
- WO-A2-2013/139985
- FR-A1- 3 014 984
- GB-A- 2 248 283
- GB-A- 2 591 295

## Description

### Technical field of the invention

The present invention relates to an innovative locking system for cords. In particular, such a locking system can be conveniently used to securely lock the end of a cord of any size and material, for example of jackets, hoods, straps, curtains, backpacks, etc.

### Background art

It is known in the state of the art that all cords normally used, e.g. in clothing, accessories, leather goods and luggage, curtains, etc., need to be secured at the end so that they cannot re-enter the exit hole and so that the end is coated and cannot be easily damaged. A number of 'cord clamp' end caps are known and currently on the market. Some of these locking caps include one or more holes on their long side, into which screws may be inserted to secure the hollow passing through them or seams passing through the hollow for its firm attachment. Other end caps are inserted at the end of the cord, pressed or riveted to be pressed onto the same cord, other caps are simply glued to the cord so as to cover it. In addition, in the case of end caps that are pressed or crimped to adhere firmly to the cord, the outer surface of these caps is subjected to pressure during assembly, which ruins the colour and material, so there is a great deal of product waste in the case of this type of end cap.

However, the above-mentioned locking systems are extremely weak, as these locking caps often break or come off and have to be replaced, often with great difficulty. It should also be noted that some of the known locking caps require complicated assembly procedures and specialized labour.

There are no known locking systems for cords that are suitable for every type of cord, easy to assemble and durable.

GB 2 248 283 A, showing the features of the preamble of claim 1, discloses a push fit connector for wires, cables, and strands WO 2013/139985 A2 discloses a system for attaching a ligament graft.

There is therefore a need to develop an innovative locking system for cords, that overcomes the drawbacks of known systems.

### Summary of the invention

Aim of the present invention is to realize a locking system for cords, extremely durable and easy to assemble. In particular, the locking system according to the present invention is realized in such a way that it can be applied by anyone to the end of any cord, in a stable and durable manner. In this way, it will no longer have to be replaced or kept damaged.

Advantageously, the cord locking system is extremely simple and can be applied to any type of cord.

Advantageously, the locking system is made of any type of material, whether plastic, metal, zamak or other special alloys, etc.

Advantageously, the locking system can be painted or coloured using any type of method, since its simple assembly on the tang does not in any way affect the coating of the outer surface.

Therefore, according to the present invention, a cord locking system is provided having the characteristics set forth in the independent claim appended hereto.

Further preferred and/or particularly advantageous embodiments of the invention are described according to the features set forth in the appended dependent claims.

### Brief description of the drawings

These and other advantages of the invention will now be described in detail, with reference to the appended Figures, which represent an exemplary embodiment of the invention, wherein:
- Figure 1 is a side view of the system comprising a tube and an insert, according to a first embodiment of the present invention, in an open configuration;
- Figure 2 is a side view of the system of Fig. 1, in assembled configuration;
- Figure 3 is a three-dimensional top view of the insert according to the invention;
- Figure 4 is a side view of the tube according to a second embodiment of the present invention;
- Figure 5 is a cross-sectional detail of the inlet portion of the insert in the tube according to the present invention;
- Figure 6 is a side view of the tube, according to a third embodiment of the present invention.

### Detailed description

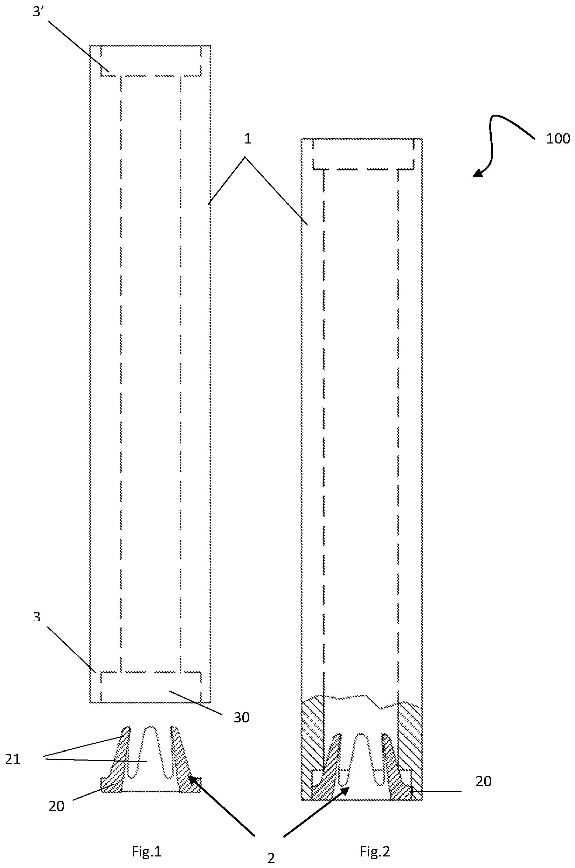

According to the present invention, as shown in Figure 1 and Figure 2, the novel locking system 100 is visible for the end of any cord comprising a hollow tube 1 and an insert 2, in open and closed configuration respectively.

Advantageously, the dimensions of the hollow tube 1 and the insert 2 may vary depending on the size of the cord to which the locking system 100 is applied.

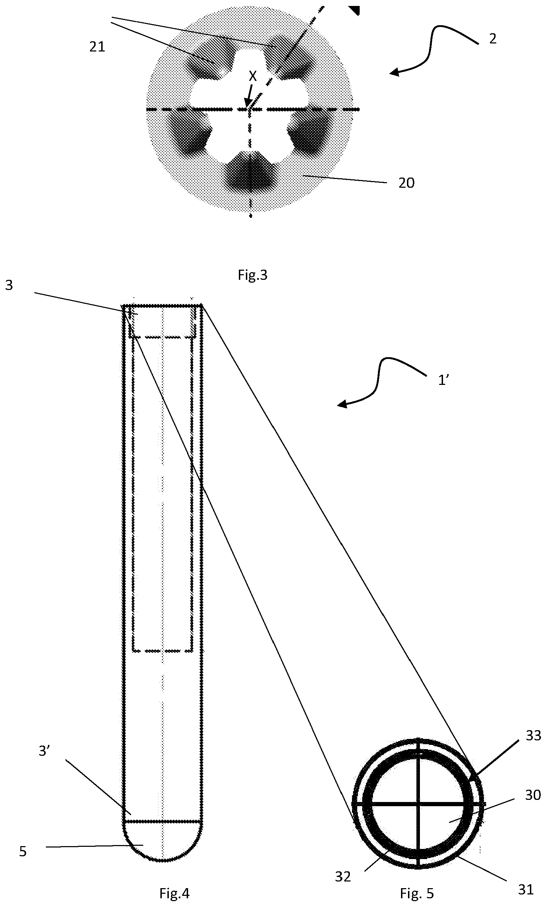

As shown in Figure 3, the insert 2 comprises a flat ring 20 and a plurality of ridges 21 having a substantially truncated pyramid shape and an inclination facing an axis X passing through the centre of the ring 20. The number, distance, and inclination of the plurality of ridges 21 is calculated from time to time depending on the size and material constituting the bead. In particular, the inclination of the plurality of ridges 21 is preferably between 5 and 20 degrees. In other words, the ridges 21 are present in a variable number depending on the size of the insert 2 and the hollow tube 1 and the diameter of the cord used. The ridges must be at least in a number greater than or equal to four in order to best perform the function of gripping the cord. The distance between two ridges 21 can be roughly between 4 mm and 5 mm.

According to a first embodiment of the present invention, the hollow tube 1 is a cylinder and has openings on both ends 3, 3'. The end 3 includes an opening 30 configured to allow insert 2 to be inserted therein. Accordingly, the insert 2 should have a slightly smaller ring diameter 20, i.e. 0.1 ÷ 0.2 mm than the diameter of the opening 30 of the end 3 of the tube 1.

Advantageously, according to this form of implementation, the insert 2 can be inserted not only at the end 3 of the hollow tube 1, but also at the opposite end 3', to be used as a guarantee seal.

In accordance with a second form of implementation, as shown in Figure 4 of the present invention, the hollow tube 1' is cylindrical in shape and has an opening at one end 3 and a closing cap 5, of a substantially U-shaped rounded shape, at the other end 3'. This is hollow tube 1' is commonly used as an end cap.

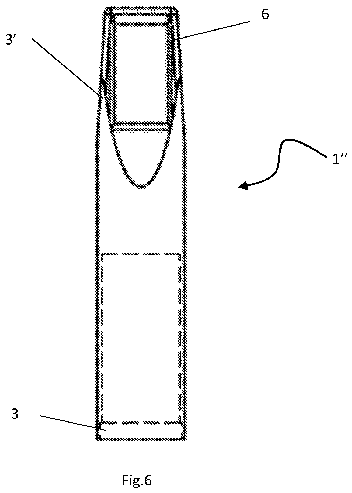

According to a third embodiment shown in Figure 6, the hollow tube 1" is cylindrical in shape and has an opening at one end 3 and at the other end 3' comprises an eyelet 6, acting as a puller, for attaching, for example, a further cord or any ornament.

Advantageously, the dimensions of the hollow tube 1, 1', 1" and the insert 2 associated therewith are plurality of sizes and depend on the size of the bead to be clamped.

Advantageously, for all embodiments of the present invention, the insert 2 comprises a flat ring 20 and a plurality of ridges 21 having a substantially truncated pyramid shape and an inclination pointing towards an axis X passing through the centre of the ring 20. The number, distance, and inclination of the plurality of ridges 21 is calculated from time to time depending on the size and material constituting the bead. In particular, the inclination of the plurality of ridges 21 is preferably between 5 and 20 degrees. In other words, the ridges 21 are present in a variable number depending on the size of the insert 2 and the hollow tube 1 and the diameter of the cord used. The ridges must be at least in a number greater than or equal to four in order to best perform the function of gripping the cord. The distance between two ridges 21 can be roughly between 4 mm and 5 mm.

According to the invention, the method of assembling the system 100 is also described. Once the insert 2 has been inserted inside the end 3 of any hollow tube 1, 1', 1", and by exerting a slight pressure on the insert 2 itself, the latter can no longer escape, but is immovably fixed by means of an inward bending of the edge 3 of the hollow tube 1, 1', 1", to lock the insert 2.

As shown in figure 5, the opening 30 is a recess made between the outer wall 31 and the inner wall 32 of the hollow tube 1, 1', 1". Inside the opening 30, the ring 20 of the insert 2 rests on a surface 33 made between the outer wall 31 and the inner wall 32 of the tube, and the ridges 21 are positioned inside the tube, remaining spaced apart from each other.

After positioning insert 2, the end of any cord can be inserted into opening 3. Once the cord has been inserted, by means of a simple force exerted in the opposite direction to the direction of insertion, the cord will come into contact with the ridges, fixing itself inside them. In this way, even if greater force is applied, the cord cannot be removed from the tube, as it is held by the ridges. Advantageously, assembly of the cord locking system is extremely simple and can be carried out by anyone.

Advantageously, the locking system can be painted or coloured using any method, since its assembly on the pigtail in no way affects the coating of the outer surface.

Advantageously, the locking system can be made of any type of material, whether plastic, metal, zamak or other special alloys, etc.

In addition to the methods of implementing the invention, as described above, it is to be understood that there are numerous further variants. It should also be understood that the above-described embodiments are merely illustrative and do not limit the subject matter of the invention, nor its possible applications or configurations. On the contrary, although the above description makes it possible for a person skilled in the art to implement the present invention at least according to an exemplary configuration thereof, it should be understood that numerous variations of the described components are conceivable, without thereby departing from the object of the invention as defined in the appended claims.

## Claims

1. Locking system (100) suitable for the end of a cord comprising a hollow tube (1, 1', 1") and an insert (2), wherein the insert (2) is fastened positioned in an opening (30) of an end (3, 3') of the hollow tube (1, 1', 1") within which the cord is passed, wherein the insert (2) comprises a flat ring (20) and a plurality of ridges (21) which securely retain the cord within the hollow tube (1, 1', 1");
said locking system (100) being **characterized in that** the opening (30) is a recess made between an outer wall (31) and an inner wall (32) of the hollow tube (1,1', 1') and **in that** - inside the opening (30) - said flat ring (20) rests on a surface (33) made between said outer wall (31) and said inner wall (32), and the ridges (21) are positioned inside the tube remaining spaced apart from each other.

2. Locking system (100) according to claim 1, wherein the plurality of ridges (21) has an almost triangular shape and inclination directed towards an axis (X) passing through the centre of the flat ring (20).

3. Locking system (100) according to claim 1 or 2, wherein the plurality of ridges (21) is in a number greater than or equal to four.

4. Locking system (100) according to any of the preceding claims, wherein a distance between two ridges of the plurality of ridges (21) is between 4 mm and 5 mm.

5. Locking system (100) according to any of the preceding claims, wherein the insert (2) is locked in said opening (30) by an inward bend in an edge (3) of the hollow tube (1, 1', 1")

6. Locking system (100) according to any of the preceding claims, wherein a difference between a diameter at the opening (30) of the end (3) of the hollow tube (1, 1', 1") and a diameter of the ring (20) of the insert (2) is within a range of 0.1 mm to 0.2 mm.

7. Locking system (100) according to any of the preceding claims, wherein an end (3') opposite the end (3) of the hollow tube (1, 1') comprises a closure cap (5) or an eyelet (6).

8. A method of assembling the locking system (100) suitable for the end of a cord according to any of claims from 1 to 7, comprising the following steps:
- positioning the insert (2) within an opening (30) of an end (3) of a hollow tube (1, 1', 1'),
- making an inward bend in the edge (3) of the hollow tube (1, 1', 1"), to lock the insert (2);
- inserting the cord inside the opening (30) of the end (3);
- exerting slight force by pulling the cord in the opposite direction to that of insertion.

## Patentansprüche

1. Verschlusssystem (100), das für das Ende einer Kordel ausgelegt ist und ein hohles Rohr (1,1',1") sowie einen Einsatz (2) umfasst, wobei der Einsatz (2) in einer Öffnung (30) eines Endes (3, 3,) des hohlen Rohrs (1, 1', 1"), durch das die Kordel geführt wird, befestigt ist, wobei der Einsatz (2) einen flachen Ring (20) und eine Vielzahl von Rippen (21) umfasst, die die Kordel sicher in dem hohlen Rohr (1, 1', 1") festhalten;
wobei das Verschlusssystem (100) **dadurch gekennzeichnet ist, dass** die Öffnung (30) eine Aussparung ist, die zwischen einer Außenwand (31) und einer Innenwand (32) des hohlen Rohrs (1, 1', 1') ausgebildet ist, und dass - innerhalb der Öffnung (30) - der flache Ring (20) auf einer Oberfläche (33) ruht, die zwischen der Außenwand (31) und der Innenwand (32) ausgebildet ist, und die Rippen (21) innerhalb des Rohrs angeordnet sind und voneinander beabstandet bleiben.

2. Verschlusssystem (100) nach Anspruch 1, wobei die Vielzahl von Rippen (21) eine nahezu dreieckige Form und eine Neigung aufweist, die auf eine Achse (X) gerichtet ist, die durch die Mitte des flachen Rings (20) verläuft.

3. Verschlusssystem (100) nach Anspruch 1 oder 2, wobei die Anzahl der Rippen (21) größer oder gleich vier ist.

4. Verschlusssystem (100) nach einem der vorhergehenden Ansprüche, wobei ein Abstand zwischen zwei Rippen der Vielzahl von Rippen (21) einen Wert zwischen 4mm und 5mm aufweist.

5. Verschlusssystem (100) nach einem der vorhergehenden Ansprüche, wobei der Einsatz (2) in der Öffnung (30) durch eine nach innen gerichtete Biegung in einer Kante (3) des hohlen Rohres (1, 1', 1") verriegelt ist.

6. Verschlusssystem (100) nach einem der vorhergehenden Ansprüche, wobei eine Differenz zwischen einem Durchmesser an der Öffnung (30) des Endes (3) des hohlen Rohrs (1,1',1") und einem Durchmesser des Rings (20) des Einsatzes (2) in einem Bereich von 0,1 mm bis 0,2 mm liegt.

7. Verschlusssystem (100) nach einem der vorhergehenden Ansprüche, wobei ein dem Ende (3) des hohlen Rohrs (1, 1') gegenüberliegendes Ende (3') eine Verschlusskappe (5) oder eine Öse (6) aufweist.

8. Verfahren zum Zusammensetzen des Verschlusssystems (100), das für das Ende einer Kordel geeignet ist, nach einem der Ansprüche 1 bis 7, das Verfahren aufweisend die folgenden Schritte:
- Positionieren des Einsatzes (2) in einer Öffnung (30) eines Endes (3) eines hohlen Rohres (1, 1', 1');
- Biegen des Randes (3) des hohlen Rohres (1, 1', 1') nach innen, um den Einsatz (2) zu verriegeln;
- Einführen der Kordel in die Öffnung (30) des Endes (3);
- Ausüben einer leichten Kraft durch leichtes Ziehen an der Kordel entgegengesetzt zur Einführrichtung.

## Revendications

1. Système de blocage (100) approprié pour l'extrémité d'un cordon comprenant un tube creux (1, 1', 1'') et un insert (2), dans lequel l'insert (2) est fixé en étant positionné dans une ouverture (30) d'une extrémité (3, 3') du tube creux (1, 1', 1") à l'intérieur duquel le cordon est passé, dans lequel l'insert (2) comprend un anneau plat (20) et une pluralité de crêtes (21) qui retiennent fermement le cordon à l'intérieur du tube creux (1, 1', 1") ;
ledit système de blocage (100) étant **caractérisé en ce que** l'ouverture (30) est un évidement constitué entre une paroi extérieure (31) et une paroi intérieure (32) du tube creux (1, 1', 1') et **en ce que**, - à l'intérieur de l'ouverture (30) - ledit anneau plat (20) repose sur une surface (33) constituée entre ladite paroi extérieure (31) et ladite paroi intérieure (32), et les crêtes (21) sont positionnées dans le tube en restant espacées les unes des autres.

2. Système de blocage (100) selon la revendication 1, dans lequel la pluralité de crêtes (21) présente une forme presque triangulaire et une inclinaison dirigée vers un axe (X) passant à travers le centre de l'anneau plat (20).

3. Système de blocage (100) selon la revendication 1 ou 2, dans lequel la pluralité de crêtes (21) est d'un nombre supérieur ou égal à quatre.

4. Système de blocage (100) selon l'une quelconque des revendications précédentes, dans lequel une distance entre deux crêtes de la pluralité de crêtes (21) est comprise entre 4 mm et 5 mm.

5. Système de blocage (100) selon l'une quelconque des revendications précédentes, dans lequel l'insert (2) est verrouillé dans ladite ouverture (30) par un pli vers l'intérieur d'un bord (3) du tube creux (1, 1', 1").

6. Système de blocage (100) selon l'une quelconque des revendications précédentes, dans lequel une différence entre un diamètre à l'ouverture (30) de l'extrémité (3) du tube creux (1, 1', 1") et un diamètre de l'anneau (20) de l'insert (2) est comprise dans une plage de 0,1 mm à 0,2 mm.

7. Système de blocage (100) selon l'une quelconque des revendications précédentes, dans lequel une extrémité (3') à l'opposé de l'extrémité (3) du tube creux (1, 1') comprend un capuchon de fermeture (5) ou un œillet (6).

8. Procédé d'assemblage du système de blocage (100) approprié à l'extrémité d'un cordon selon l'une quelconque des revendications 1 à 7, comprenant les étapes suivantes :
- le positionnement de l'insert (2) dans une ouverture (30) d'une extrémité (3) d'un tube creux (1, 1', 1'),
- la réalisation d'un pli vers l'intérieur d'un bord (3) du tube creux (1, 1', 1") pour bloquer l'insert (2) ;
- l'insertion du cordon à l'intérieur l'ouverture (30) de l'extrémité (3) ;
- l'application d'une légère force en tirant le cordon dans la direction opposée à la direction de l'insertion.
